# EUROPEAN PATENT APPLICATION

(11) **EP 4 520 725 A1**
(43) Date of publication of application: **12.03.2025**
(21) Application number: 24196026.9
(22) Date of filing: 22.08.2024
(51) Int. Cl.: C01G 53/50, H01M 4/131, H01M 4/36, H01M 4/525

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 24.08.2023 KR 20230111553
(71) Applicant: SAMSUNG SDI CO., LTD., Giheung-gu Yongin-si, Gyeonggi-do 17084 (KR)
(72) Inventor: KANG, Byungwuk, 17084 Yongin-si (KR); KIM, Young-Ki, 17084 Yongin-si (KR); DOO, Sungwook, 17084 Yongin-si (KR); CHOO, Sung Ho, 17084 Yongin-si (KR); JUN, Dowook, 17084 Yongin-si (KR); KANG, Gwiwoon, 17084 Yongin-si (KR); JEONG, Jaeyong, 17084 Yongin-si (KR); KONG, Youngsun, 17084 Yongin-si (KR); YOON, Jaesang, 17084 Yongin-si (KR); KANG, Seok Mun, 17084 Yongin-si (KR)
(74) Representative: Marks & Clerk LLP

(57) **Abstract**

A positive electrode active material, a method of preparing the same, a positive electrode and a rechargeable lithium battery including the same are disclosed. The positive electrode active material includes core particles including a layered lithium nickel-manganese-based composite oxide, a first coating layer disposed on a surface of the core particles and containing Al, and a second coating layer disposed on the first coating layer and containing Mn.

## Description

### BACKGROUND

### (a) Field

The present disclosure relates to positive electrode active materials, preparation methods thereof, positive electrodes including the same, and rechargeable lithium batteries including the same.

### (b) Description of the Related Art

A portable information device such as a cell phone, a laptop, smart phone, and/or the like and/or an electric vehicle has utilized a rechargeable lithium battery having relatively high energy density and easy portability as a driving power source. Recently, research has been actively conducted to utilize a rechargeable lithium battery with relatively high energy density as a driving power source for hybrid and/or electric vehicles, or as a power storage power source for home power storage units and/or power walls.

Various positive electrode active materials have been investigated to realize rechargeable lithium batteries suitable for these applications. Among them, lithium nickel-based oxide, lithium nickel manganese cobalt composite oxide, lithium nickel cobalt aluminium composite oxide, and lithium cobalt oxide are mainly utilized as positive electrode active materials. However, while the demand for large-sized, relatively high-capacity, or relatively high-energy-density rechargeable lithium batteries has recently increased, a shortage (severe shortage) in the supply of a positive electrode active material containing cobalt, a rare metal, is expected. For example, because the cobalt is expensive and lacks remaining reserves (e.g., has declining availability), there is a need for developing a positive electrode active material excluding (e.g., not including or free of) the cobalt or utilizing cobalt in a reduced amount.

### SUMMARY

Aspects according to some embodiments are directed toward a positive electrode active material, which includes a lithium nickel-manganese-based composite oxide, securing economic feasibility, high capacity, and long cycle-life characteristics and exhibiting improved high-voltage characteristics and high-temperature characteristics, a method of preparing the positive electrode active material, a positive electrode, and a rechargeable lithium battery including the same.

Additional aspects will be set forth in part in the description which follows and, in part, will be apparent from the description, or may be learned by practice of the presented embodiments of the disclosure.

In one or more embodiments, a positive electrode active material includes a core particle (e.g., core particles (e.g., each)) including a lithium nickel-manganese-based composite oxide (e.g. a layered lithium nickel-manganese-based composite oxide), a first coating layer on a surface of the core particle and containing Al, and a second coating layer on the first coating layer and containing Mn.

In one or more embodiments, a method of preparing a positive electrode active material includes mixing a nickel-manganese-based composite hydroxide and a lithium raw material and performing a first heat treatment to obtain a lithium nickel-manganese-based composite oxide (e.g. a layered lithium nickel-manganese-based composite oxide); mixing an Al raw material and the lithium nickel-manganese-based composite oxide with an aqueous solvent to prepare a first mixture, and mixing an Mn raw material with the first mixture to prepare a second mixture; and drying the second mixture and performing a second heat treatment.

In one or more embodiments, a positive electrode includes a positive electrode current collector and a positive electrode active material layer on the positive electrode current collector, wherein the positive electrode active material layer includes the aforementioned positive electrode active material.

In one or more embodiments, a rechargeable lithium battery includes the positive electrode, a negative electrode, and an electrolyte.

At least some of the above and other features of the invention are set out in the claims.

The positive electrode active material according to one or more embodiments may maximize or increase capacity, while minimizing or reducing a production cost, to ensure long cycle-life characteristics and improve high-voltage characteristics and high-temperature characteristics. When the positive electrode active material is applied to a rechargeable lithium battery, high initial charge/discharge capacity and efficiency may be achieved under high-voltage operating conditions, long cycle-life characteristics may be realized, and an amount of gas generated due to the high-voltage and high-temperature operation may be effectively suppressed or reduced.

### BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings,
FIG. 1 is a schematic illustration of a cylindrical battery according to some embodiments.
FIG. 2 is a schematic illustration of a prismatic battery according to some embodiments.
FIG. 3 is a schematic illustration of a pouch-type or kind battery according to some embodiments.
FIG. 4 is a schematic illustration of a pouch-type or kind battery according to some embodiments.
FIG. 5 is a SEM-EDS image of a cross section of the positive electrode active material of Example 1, with Mn highlighted.
FIG. 6 is a SEM-EDS image of the cross section of the positive electrode active material of Example 1, with Al highlighted.
FIG. 7 is a HR-STEM image of the cross section of the positive electrode active material of Example 1.

### DETAILED DESCRIPTION OF THE EMBODIMENTS

Hereinafter, embodiments will be described in more detail so that those of ordinary skill in the art can easily implement them. However, this disclosure may be embodied in many different forms and should not be construed as limited to the example embodiments set forth herein.

The terminology used herein is used to describe embodiments only, and is not intended to limit the present disclosure. The singular expression includes the plural expression unless the context clearly dictates otherwise.

As used herein, the term "combination thereof" refers to a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, (e.g., act or task) step, element, or a (e.g., any suitable) combination thereof, but it does not preclude the possibility of the presence or addition of one or more other features, numbers, (e.g., acts or tasks) steps, elements, or a (e.g., any suitable) combination thereof.

In the drawings, the thickness of layers, films, panels, regions, and/or the like, are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

In addition, the term "layer" as used herein includes not only a shape formed on the whole surface if (e.g., when) viewed from a plan view, but also a shape formed on a partial surface.

In addition, the average particle diameter may be measured by a suitable method (e.g., known to those skilled in the art), for example, by a particle size analyzer, or by a transmission electron microscopic image or a scanning electron microscopic image. In one or more embodiments, it is possible to obtain an average particle diameter value by measuring utilizing a dynamic light scattering method, performing data analysis, counting the number of particles for each particle size range, and calculating from this. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to the diameter (D₅₀) of particles having a cumulative volume of 50 volume% in the particle size distribution that is obtained by measuring the size (diameter or length of the major axis) of about 20 particles at random in a scanning electron microscope image.

Herein, the term "or" is not to be construed as an exclusive meaning, for example, "A or B" refers to A, B, A+B, and/or the like.

The term "Metal" as used herein refers to ordinary metals, transition metals and metalloids (semi-metals).

### Positive Electrode Active Material

In one or more embodiments, a positive electrode active material includes core particles (e.g., one or more core particles) including a lithium nickel-manganese-based composite oxide, a first coating layer arranged on the surface of the core particles and containing Al, and a second coating layer arranged on the first coating layer and containing Mn.

As the price of cobalt, a rare metal, has recently risen sharply, there is a demand for the development of positive electrode active materials that exclude (do not include) cobalt or with a reduced cobalt content (e.g., amount). Among them, a positive electrode active material having an olivine crystal structure such as lithium iron phosphate (LFP), lithium manganese phosphate (LMP), lithium manganese iron phosphate (LMFP), and/or the like or a spinel crystal structure such as lithium manganese oxide (LMO) and/or the like has a limitation in realizing high capacity due to small available lithium capacity within their structures. The layered nickel-manganese positive electrode active material has excellent or suitable capacity and efficiency characteristics due to the high available lithium capacity in the structure, making it suitable as a material for high-capacity batteries. However, as cobalt, which plays a key role in the layered structure, is removed, structural stability decreases, resistance increases, and it becomes difficult to secure long cycle-life characteristics. In addition, excluding cobalt leads to a problem that the side reaction between the positive electrode active material and the electrolyte is accelerated under high-voltage and high-temperature conditions, thereby increasing an amount of gas generated and deteriorating the cycle-life characteristics.

In one or more embodiments, the first coating layer and the second coating layer are introduced on the core particle of the layered lithium nickel-manganese-based composite oxide, to provide a positive electrode active material that can maximize or increase capacity and efficiency and achieve long cycle-life characteristics by reducing gas generation even under high-voltage or high-temperature conditions.

Core Particles

The core particles include lithium nickel-manganese-based composite oxide. The nickel content (e.g., amount) may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal excluding lithium in the lithium nickel-manganese-based composite oxide. If the nickel content (e.g., amount) satisfies the above ranges, high capacity can be achieved and structural stability can be increased even if the cobalt content (e.g., amount) is reduced.

For example, a manganese content (e.g., amount) may be greater than or equal to about 10 mol%, for example, about 10 mol% to about 40 mol%, about 15 mol% to about 40 mol%, about 15 mol% to about 35 mol%, about 15 mol% to about 30 mol%, or about 20 mol% to about 30 mol% based on 100 mol% of a total metal excluding lithium in the lithium nickel-manganese-based composite oxide. If the manganese content (e.g., amount) satisfies the above ranges, the positive electrode active material may improve structural stability while realizing high capacity.

The lithium nickel-manganese-based composite oxide may be, for example, a lithium nickel-manganese-aluminium-based composite oxide that further includes aluminium in addition to nickel and manganese. When the composite oxide includes aluminium, it is advantageous or suitable to maintain a stable layered structure even if the element cobalt is excluded from the structure. The aluminium content (e.g., amount) based on 100 mol% of the lithium nickel-manganese-aluminium-based composite oxide (e.g., of a total metal excluding lithium in the lithium nickel-manganese-based composite oxide) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 2.5 mol%. If the aluminium content (e.g., amount) satisfies the above ranges, a stable layered structure may be maintained even if cobalt is excluded, the problem of structure collapse due to charging and discharging may be suppressed or reduced, and long cycle-life characteristics of the positive electrode active material may be realized.

According to one or more embodiments, the concentration of aluminium within the core particle may be substantially uniform. In some embodiments, there may not be a concentration gradient of aluminium from the center to the surface within the core particle, or the aluminium concentration in the internal portion of the core particle is neither higher nor lower than in the external portion, and that the aluminium within the core particle is evenly distributed. This may be a structure obtained by utilizing aluminium raw materials during precursor production without additional doping of aluminium during the synthesis of the core particles and thereby synthesizing a composite oxide utilizing nickel-manganese-aluminium-based hydroxide as a precursor. The core particle may be in the form of a secondary particle in which a plurality of primary particles are aggregated (e.g., agglomerated), and the aluminium content (e.g., amount) inside the primary particle may be the same (or substantially the same) or similar regardless of the location of the primary particle. For example, if a primary particle is selected at a random position in the cross section of a secondary particle and the aluminium content (e.g., amount) is measured inside the primary particle rather than at its interface (e.g., with another primary particle), regardless of the location of the primary particle, that is, whether the primary particle is close to the center of the secondary particle or close to the surface, the aluminium content (e.g., amount) may be (e.g., substantially) the same/similar/uniform. In this structure, a stable layered structure can be maintained even if cobalt is absent or is present in a very small amount, and aluminium by-products or aluminium aggregates are not generated, so that the capacity, efficiency, and cycle-life characteristics of the positive electrode active material can be improved at the same time.

In some embodiments, the lithium nickel-manganese-based composite oxide may be represented by Chemical Formula 1.

[Chemical Formula 1] Liₐ₁Niₓ₁Mn_{y1}Al_{z1}M¹_{w1}O_{2-b1}X_{b1}

In Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, Y, and Zr, and X is one or more elements selected from among F, P, and S.

In some embodiments, in Chemical Formula 1, 0.9≤a1≤1.5, or 0.9≤a1≤1.2. In some embodiments, Chemical Formula 1 may contain aluminium, in which case 0.6≤x1≤0.8, 0.1≤y1≤0.39, 0.01≤z1≤0.03, and 0≤w1≤0.29, and, for example, 0.6≤x1≤0.8, 0.1≤y1≤0.39, 0.01 <z1≤0.03, and 0≤w1≤0.29 may be satisfied.

In Chemical Formula 1, for example, 0.6≤x1≤0.79, 0.6≤x1≤0.78, 0.6≤x1≤0.75, 0.65≤x1≤0.8, or 0.7≤x1≤0.79; 0.1≤y1≤0.35, 0.1≤y1≤0.30, 0.1≤y1≤0.29, 0.15≤y1≤0.39, or 0.2≤y1≤0.3; 0.01≤z1≤0.025, 0.01 <z1≤0.02, or 0.01 <z1≤0.019; and 0≤w1≤0.28, 0≤w1≤0.27, 0≤w1≤0.26, 0≤w1≤0.25, 0≤w1≤0.24, 0≤w1≤0.23, 0≤w1≤0.22, 0≤w1≤0.21, 0≤w1≤0.2, 0≤w1≤0.15, 0≤w1≤0.1, or 0≤w1≤0.09.

The lithium nickel-manganese-based composite oxide may be a cobalt-free compound that does not include cobalt or includes a very small amount of cobalt. For example, the lithium nickel-manganese-based composite oxide may have a cobalt content (e.g., amount) of about 0 mol% to about 0.01 mol% based on 100 mol% of a total metal excluding lithium in the lithium nickel-manganese-based composite oxide.

The core particles may be in the form of secondary particles made by aggregating a plurality of primary particles. The secondary particles may be spherical, elliptical, polyhedral, or irregular in shape, and the primary particles may be spherical, elliptical, plate-shaped, or a (e.g., any suitable) combination thereof.

The core particles are susceptible to chemical attack from components in the electrolyte if (e.g., when) the battery is operated under high voltage or high temperature conditions, and side reactions with the electrolyte may occur. Accordingly, there may be a problem that the battery cycle-life and safety are reduced due to the large amount of gas generated. These problems can be solved by introducing a coating layer according to one or more embodiments that will be described in more detail later.

### First Coating Layer

The Al content (e.g., amount) in the first coating layer may be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the positive electrode active material. This Al content (e.g., amount) refers only to the content (e.g., amount) of aluminium included in the first coating layer, separately from (not counting for) the aluminium included within the core particle. The aluminium content (e.g., amount) in the first coating layer can be measured, for example, through SEM-EDS analysis of the surface or cross-section of the positive electrode active material. If (e.g., when) the aluminium content (e.g., amount) in the first coating layer satisfies these ranges, the coating layer may have a substantially uniform and thin thickness, which may not increase resistance of the positive electrode active material while effectively suppressing or reducing a side reaction with the electrolyte and thereby, improve cycle-life characteristics of a rechargeable lithium battery under high-voltage and high-temperature conditions. For example, if the aluminium content (e.g., amount) of the first coating layer is excessive (e.g., greater than about 2 mol%), a substantially uniform coating layer may not be formed or resistance may increase, which may reduce charge/discharge efficiency and cycle-life characteristics, and if the aluminium content (e.g., amount) of the first coating layer is too small (e.g., lower than about 0.1 mol%), a coating layer of an appropriate or suitable thickness is not formed and an effect of suppressing or reducing side reactions with the electrolyte may be reduced.

The first coating layer may be in the form of a film that continuously surrounds the surface of the core particle, for example, may be in the form of a shell that surrounds the entire surface of the core particle. This is distinct from a structure in which only portion of the surface of the core particle is partially coated. According to one or more embodiments, the first coating layer may be formed to cover the entire surface of the core particle and may be formed to be thin (e.g., very thin) and substantially uniform in thickness, and therefore the positive electrode active material does not increase resistance or decrease capacity, improves structural stability, effectively suppresses side reactions with electrolytes, reduces the amount of gas generated under high-voltage and high-temperature conditions, and achieves long cycle-life characteristics.

A thickness of the coating layer may be about 5 nanometers (nm) to about 40 nm, for example, about 5 nm to about 30 nm, or about 5 nm to about 20 nm. When the coating layer satisfies these thickness ranges, the structural stability of the positive electrode active material may be improved without increasing resistance or reducing capacity due to the coating, and the side reaction with the electrolyte may be effectively suppressed or reduced. The thickness of the first coating layer may be measured through, for example, scanning electron microscope (SEM), transmission electron microscopy (TEM), time-of-flight secondary ion mass spectrometry (TOF-SIMS), X-ray photoelectron spectroscopy (XPS), or energy dispersive X-ray spectroscopy (EDS) analysis, and the thickness range of the coating layer may be measured through TEM-EDS line profile.

The first coating layer may be thicker than the second coating layer.

The first coating layer may be thin and substantially uniform in thickness, at the level of several to tens of nanometers. For example, the variation in coating layer thickness within one positive electrode active material particle may be less than or equal to about 20%, less than or equal to about 18%, or less than or equal to about 15%. Herein, the deviation in first coating layer thickness refers to the first coating layer thickness within one positive electrode active material particle. For example, the deviation of the first coating layer thickness may be calculated by measuring the thickness of about 10 points in an electron microscope image of the cross-section of a single positive electrode active material particle to calculate an arithmetic average, and then dividing the absolute value of the difference between one data and the arithmetic average value by the arithmetic average value and multiplying by 100. The fact that the deviation or standard deviation of the first coating layer thickness satisfies the above ranges indicates that a first coating layer of substantially uniform thickness is formed (e.g., well formed) in a form of a film on the surface of the positive electrode active material particle. Accordingly, the structural stability of the positive electrode active material is improved, side reactions with the electrolyte are effectively suppressed or reduced, and the increase in resistance or decrease in capacity due to coating can be minimized or reduced.

The first coating layer may include, for example, aluminium oxide, lithium-aluminium oxide, or a (e.g., any suitable) combination thereof. The first coating layer may have a layered structure. For example, the compound included in the first coating layer may have a layered structure.

In one or more embodiments, the first coating layer may further contain nickel, manganese, or a (e.g., any suitable) combination thereof in addition to aluminium.

### Second Coating Layer

The Mn content (e.g., amount) in the second coating layer may be about 0.01 mol% to about 1 mol%, for example, about 0.01 mol% to about 0.9 mol%, about 0.01 mol% to about 0.7 mol%, about 0.05 mol% to about 0.5 mol%, or about 0.1 mol% to about 0.4 mol% based on 100 mol% of a total metal excluding lithium in the positive electrode active material. The Mn content (e.g., amount) in the second coating layer can be measured, for example, through SEM-EDS analysis of the surface or cross-section of the positive electrode active material. When the Mn content (e.g., amount) in the second coating layer satisfies these ranges, the coating layer may have a substantially uniform and thin thickness, which may not increase resistance of the positive electrode active material and may effectively suppress or reduce a side reaction with the electrolyte and thereby, improve cycle-life characteristics of a rechargeable lithium battery under high-voltage and high-temperature conditions. For example, if the Mn content (e.g., amount) of the second coating layer is excessive (e.g., greater than about 1 mol%), a substantially uniform coating layer may not be formed or resistance may increase, which may reduce charge/discharge efficiency and cycle-life characteristics, and if the Mn content (e.g., amount) of the second coating layer is too small (e.g., lower than about 0.01 mol%), a coating layer of an appropriate or suitable thickness is not formed and an aspect of suppressing or reducing side reactions with the electrolyte may be reduced.

The second coating layer may be in the form of a film or shell that continuously surrounds (e.g., completely surrounds) the surface of the first coating layer. According to one or more embodiments, because the coating layer may be formed to completely surround the outermost surface of the positive electrode active material but still has a very thin and substantially uniform thickness, the positive electrode active material may neither exhibit an increase in resistance nor deteriorate capacity but may improve structural stability, effectively suppress or reduce a side reaction with an electrolyte, reduce a gas generation amount, and, realize long-term cycle-life characteristics.

A thickness of the second coating layer may be less than or equal to about 10 nm, for example, about 0.1 nm to about 10 nm, about 0.5 nm to about 9 nm, about 1 nm to about 7 nm, or about 1 nm to about 5 nm. If the second coating layer satisfies these thickness ranges, the structural stability of the positive electrode active material may be improved without increasing resistance or reducing capacity due to the coating, and the side reaction with the electrolyte may be effectively suppressed or reduced. The thickness of the second coating layer may be measured through, for example, SEM, TEM, TOF-SIMS, XPS, or EDS analysis, and the thickness range of the coating layer may be measured through TEM-EDS line profile.

The second coating layer according to one or more embodiments may be thin and substantially uniform in thickness, at the level of several to tens of nanometers. For example, the deviation in the second coating layer thickness within one positive electrode active material particle may be less than or equal to about 20%, less than or equal to about 18%, or less than or equal to about 15%. Herein, the deviation in second coating layer thickness refers to the second coating layer thickness within one positive electrode active material particle. For example, the deviation of the second coating layer thickness may be calculated by measuring the thickness of about 10 points in an electron microscopic image of the cross-section of a single positive electrode active material particle to calculate an arithmetic average, and then dividing the absolute value of the difference between one data and the arithmetic average value by the arithmetic average value and multiplying by 100. The fact that the deviation or standard deviation of the second coating layer thickness satisfies the above ranges indicate that a coating layer of substantially uniform thickness is formed (e.g., well formed) in the form of a film on the surface of the positive electrode active material particle. Accordingly, the structural stability of the positive electrode active material is improved, side reactions with the electrolyte are effectively suppressed or reduced, and the increase in resistance or decrease in capacity due to coating can be minimized or reduced.

In some embodiments, the second coating layer may further include Al in addition to Mn. The second coating layer may include, for example, manganese oxide, lithium-manganese oxide, aluminium-manganese oxide, lithium-aluminium-manganese oxide, or a (e.g., any suitable) combination thereof. The second coating layer may have a layered structure. In some embodiments, the second coating layer may further include spinel structure.

In one or more embodiments, the first coating layer may be thicker than the second coating layer. For example, a ratio of the thickness of the second coating layer to the thickness of the first coating layer may be less than or equal to about 0.5, for example, less than or equal to about 0.4, or less than or equal to about 0.3. When thicknesses of the first coating layer and the second coating layer satisfy this relationship, the structural stability of the positive electrode active material may be improved without increasing resistance or decreasing capacity due to the coating; and high voltage characteristics and high temperature characteristics may be improved by effectively suppressing or reducing side reactions with the electrolyte.

The Al content (e.g., amount) of the first coating layer may be greater than the Mn content (e.g., amount) of the second coating layer. Herein, the content (e.g., amount) may refer to a molar content (e.g., amount) or a molar content (e.g., amount) relative to 100 mol% of a total metal excluding lithium in the positive electrode active material. For example, a ratio of the Mn content (e.g., amount) of the second coating layer to the Al content (e.g., amount) of the first coating layer may be less than 0.5, for example, less than or equal to about 0.4, or less than or equal to about 0.3. When the Al content (e.g., amount) of the first coating layer and Mn content (e.g., amount) of the second coating layer satisfy this relationship, the structural stability of the positive electrode active material may be improved without increasing resistance or decreasing capacity due to the coating; and high voltage characteristics and high temperature characteristics may be improved by effectively suppressing or reducing side reactions with the electrolyte.

### Grain Boundary Coating Portion

In one or more embodiments, during the first coating layer formation process, aluminium may diffuse into the core particles. Accordingly, the positive electrode active material according to one or more embodiments may further include a grain boundary coating portion including aluminium and arranged on the surface of the primary particles in the internal portion of the secondary particles. Herein, the secondary particle refers to the core particle, and the internal portion of the secondary particle may refer to the entire internal portion excluding the surface of the secondary particle, or the internal portion may be a region from the center of the secondary particle to the surface of the secondary particle, up to about 60 length% of the radius of the secondary particle. The grain boundary coating is distinct from the coating layer on the surface of the core particle, and refers to the coating portion formed on the surface of the primary particles inside the core particle. The presence of a grain boundary coating portion can be confirmed through SEM-EDS analysis of the cross-section of the positive electrode active material. By forming the aluminium grain boundary coating portion, the positive electrode active material can become more structurally stable and its cycle-life characteristics can be improved.

The aluminium content (e.g., amount) in the grain boundary coating portion is not particularly limited, and, for example, the aluminium content (e.g., amount) in the grain boundary coating portion may be less than the aluminium content (e.g., amount) in the coating layer.

In some embodiments, the grain boundary coating portion may further include nickel, magnesium, yttrium, or a (e.g., any suitable) combination thereof in addition to aluminium.

The average particle diameter (D₅₀) of the secondary particles of the positive electrode active material according to one or more embodiments is not particularly limited, but may be, for example, about 1 micron or micrometer (µm) to about 25 µm, about 5 µm to about 20 µm, about 10 µm to about 20 µm, about 11 µm to about 18 µm, or about 12 µm to about 15 µm. As used herein, if (e.g., when) a definition is not otherwise provided, the average particle diameter of the secondary particles refers to a diameter (D₅₀) of particles having a cumulative volume of 50 volume% in the particle size distribution that is obtained by measuring the size (diameter or major axis length) of about 20 particles at random in a scanning electron microscopic image for positive electrode active materials. If the average particle diameter of the secondary particles of the positive electrode active material satisfies the above ranges, high capacity and long cycle-life can be realized and it can be suitable or advantageous to form a coating layer according to one or more embodiments.

The cobalt content (e.g., amount) in the positive electrode active material according to one or more embodiments may be, for example, less than or equal to about 0.01 mol%, less than or equal to about 0.005 mol%, or less than or equal to about 0.001 mol%, for example, about 0 mol% to about 0.01 mol% based on 100 mol% of a total metal excluding lithium in the positive electrode active material. The positive electrode active material according to one or more embodiments may be, for example, a cobalt-free positive electrode active material.

In one or more embodiments, a positive electrode active material may not include (e.g., may exclude) sodium. In related art, sodium ions may be utilized in the preparing process of a positive electrode active material, but according to the preparing method described in more detail later, core particles with a stable structure and a coating layer of substantially uniform thickness can be formed without utilizing sodium ions.

### Method of Preparing Positive Electrode Active Material

In one or more embodiments, a method of preparing a positive electrode active material includes mixing a nickel-manganese-based composite hydroxide and a lithium raw material and performing a first heat treatment to obtain a lithium nickel-manganese-based composite oxide; adding an Al raw material and the lithium nickel-manganese-based composite oxide to an aqueous solvent, followed by mixing to prepare a first mixture, and adding an Mn raw material to the first mixture and followed by mixing to prepare a second mixture; and drying the second mixture and performing a second heat treatment. The aforementioned positive electrode active material may be manufactured through the aforementioned method.

The layered nickel-manganese-based composite hydroxide as a precursor of core particles, may be in the form of secondary particles in which a plurality of primary particles are aggregated (e.g., agglomerated), and may not contain cobalt or may contain a very small amount of cobalt. For example, the nickel-manganese-based composite hydroxide (or nickel-manganese-aluminium-based composite hydroxide) may be a cobalt-free nickel-manganese-based composite hydroxide (or a cobalt-free nickel-manganese-aluminium-based composite hydroxide). The nickel-manganese-based composite hydroxide (or nickel-manganese-aluminium-based composite hydroxide) may be prepared by a suitable (e.g., general) co-precipitation method.

The nickel content (e.g., amount) in the nickel-manganese-based composite hydroxide may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal in the nickel-manganese-based composite hydroxide. If (e.g., when) the nickel content (e.g., amount) satisfies the above ranges, high capacity can be achieved and structural stability can be increased even if the cobalt content (e.g., amount) is reduced.

The manganese content (e.g., amount) in the layered nickel-manganese-based composite hydroxide may be greater than or equal to about 10 mol%, for example, about 10 mol% to about 40 mol%, about 15 mol% to about 39 mol%, about 15 mol% to about 35 mol%, about 15 mol% to about 30 mol%, or about 20 mol% to about 30%, based on 100 mol% of a total metal in the nickel-manganese-based composite hydroxide.

In one or more embodiments, if (e.g., when) the nickel-manganese-based composite hydroxide further contains aluminium, the aluminium content (e.g., amount) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol% based on 100 mol% of a total metal in the nickel-manganese-based composite hydroxide. If the manganese and aluminium contents of the composite hydroxide satisfy the above ranges, high capacity may be realized while structural stability of the positive electrode active material may be increased, and production price may be lowered to increase economic efficiency.

In a method for preparing a positive electrode active material according to one or more embodiments, in the preparation of core particles, aluminium is not additionally doped, but an aluminium raw material may be utilized to prepare a precursor, so that a nickel-manganese-aluminium-based composite hydroxide, in which aluminium is uniformly (e.g., substantially uniformly) dispersed in the structure, may be utilized as the precursor. When such a precursor is utilized, the positive electrode active material may stably maintain a layered structure without cobalt despite repeated charges and discharges, and aluminium byproducts or aluminium aggregates may not be formed, thereby improving capacity and efficiency characteristics and cycle-life characteristics of the positive electrode active material.

In the layered nickel-manganese-based composite hydroxide, the cobalt content (e.g., amount) may be less than or equal to about 0.01 mol%, less than or equal to about 0.005 mol%, or less than or equal to about 0.001 mol% based on 100 mol% of a total metal in the nickel-manganese-based composite hydroxide. This nickel-manganese-based composite hydroxide may be economical as it avoids the increase in unit cost caused by cobalt, maximizes or increases capacity, and improves structural stability.

In some embodiments, the layered nickel-manganese-based composite hydroxide may be represented by Chemical Formula 2.

[Chemical Formula 2] Niₓ₂Mn_{y2}Al_{z2}M²_{w2}(OH)₂

In Chemical Formula 2, 0.6≤x2≤0.8, 0.1≤y2≤0.4, 0≤z2≤0.03, 0≤w2≤0.3, and 0.9≤x2+y2+z2+w2≤1.1, and M² is one or more elements selected from among B, Ba, Ca, Ce, Cr, Fe, Mg, Mo, Nb, Si, Sn, Sr, Ti, V, W, Y, and Zr.

In some embodiments, in Chemical Formula 2, 0.6≤x2≤0.8, 0.1≤y2≤0.39, 0.01≤z2≤0.03, 0≤w2≤0.29.

The layered nickel-manganese-based composite hydroxide is in the form of particles, and the average particle diameter (D₅₀) of the particles may be about 1 µm to about 25 µm, about 5 µm to about 20 µm, about 10 µm to about 20 µm, about 11 µm to about 18 µm, or about 12 µm to about 15 µm.

The layered nickel-manganese-based composite hydroxide and the lithium raw material may be mixed in a molar ratio of about 1:0.9 to about 1:1.8, for example, about 1:0.9 to about 1:1.5 or about 1:0.9 to about 1:1.2. The first heat treatment may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours. Through the first heat treatment, lithium nickel-manganese-based composite oxide may be obtained. The obtained composite oxide is substantially the same as that described for the core particles in the positive electrode active material part.

The layered lithium nickel-manganese-based composite oxide has a significantly different residual lithium content (e.g., amount) and different surface characteristics from an oxide with other compositions, for example, a related art nickel-based oxide such as a lithium nickel-cobalt-manganese-based composite oxide, a lithium nickel-cobalt-aluminium-based composite oxide, and/or the like. Related art coating methods may not succeed in forming a good or suitable coating layer thereon in the form of a substantially uniform film. In one or more embodiments, a method is applied to improve high-voltage characteristics by uniformly (e.g., substantially uniformly) forming a coating layer with a very thin thickness on the surface of a lithium nickel-manganese-based composite oxide with a very small amount of cobalt and a nickel content (e.g., amount) of greater than or equal to about 60 mol%.

In one or more embodiments, Al raw material is added to an aqueous solvent and mixed, then layered lithium nickel-manganese-based composite oxide is added and mixed to provide (e.g., induce) a first coating layer on the surface of the layered lithium nickel-manganese-based composite oxide particles (core particles). Subsequently, Mn raw material is added to the mixed solution and mixed to provide (e.g., induce) a second coating layer. After removing the solvent from the mixed solution and drying it, a second heat treatment is performed to obtain a positive electrode active material in which an Al-containing first coating layer and a Mn-containing second coating layer are sequentially formed on the surface of the core particle. This can be referred to as a continuous wet coating method.

The aqueous solvent may include distilled water, an alcohol-based solvent, or a (e.g., any suitable) combination thereof. The Al raw material may include, for example, aluminium nitrate, aluminium sulfate, aluminium carbonate, aluminium hydroxide, or a (e.g., any suitable) combination thereof. For example, the Al raw material may include aluminium sulfate, and in this case, it is suitable or advantageous to form a first coating layer with a substantially uniform thickness on the surface of the lithium nickel-manganese-based composite oxide particles.

An Al content (e.g., amount) of the aluminium raw material may be designed to be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the positive electrode active material. If the Al coating content (e.g., amount) is designed to have these ranges, the first coating layer may be formed to have a thin and substantially uniform thickness of several to tens of nanometers, which may reduce an amount of gas generated in a rechargeable lithium battery under high-voltage or high-temperature operating conditions and improve high capacity and long cycle-life characteristics.

A solution obtained by mixing the aluminium raw materials in an aqueous solvent may have a pH of about 1.5 to about 3.5, for example, about 2.0 to about 3.4, about 2.5 to about 3.3, about 2.7 to about 3.3, or about 2.9 to about 3.2. Adding (e.g., dropping) and mixing the lithium nickel-manganese-based composite oxide into the aqueous solvent mixed with aluminium raw materials may proceed for about 5 minutes to about 80 minutes, about 5 minutes to about 60 minutes, or about 5 minutes to about 40 minutes. After the stirring, the mixed solution may have a pH of about 4.5 to about 8.5, for example, about 5.0 to about 8.0, about 5.5 to about 7.5, or about 6.0 to about 7.0. When these conditions are satisfied, it is suitable or advantageous to form a first coating layer with a substantially uniform thickness.

The Mn raw material may include, for example, manganese nitrate, manganese sulfate, manganese carbonate salt, manganese hydroxide, or a (e.g., any suitable) combination thereof. The Mn content (e.g., amount) of the Mn raw material may be designed to be about 0.01 mol% to about 1 mol%, for example, about 0.01 mol% to about 0.9 mol%, about 0.01 mol% to about 0.7 mol%, about 0.05 mol% to about 0.5 mol%, or about 0.1 mol% to about 0.4 mol% based on 100 mol% of a total metal excluding lithium in the positive electrode active material. If the Mn coating content (e.g., amount) is designed to have these ranges, the second coating layer may be formed to have a thin and substantially uniform thickness of several to tens of nanometers, which may improve performance of the rechargeable lithium battery under high-voltage or high-temperature operating conditions and high-capacity and long cycle-life characteristics.

The adding and mixing of the Mn raw material may be performed for about 5 minutes to about 80 minutes, about 5 minutes to about 60 minutes, or about 10 minutes to about 40 minutes. After the stirring, the mixed solution may have a pH of about 4.5 to about 8.5, for example, about 5.0 to about 8.0, about 5.5 to about 7.5, or about 6.0 to about 7.0. If these conditions are satisfied, it is suitable or advantageous to form a second coating layer with a substantially uniform thickness.

The removing of the solvent and drying the mixed solution may be performed, for example, at about 40 °C to about 240 °C, about 100 °C to about 220 °C, or about 150 °C to about 200 °C.

The second heat treatment may be performed in an oxygen atmosphere at a temperature range of about 700 °C to about 850 °C, about 750 °C to about 840 °C, or about 800 °C to about 830 °C for about 2 hours to about 20 hours, or about 3 to about 10 hours. Additionally, the second heat treatment temperature may be lower than the first heat treatment temperature, and the second heat treatment time may be the same as or shorter than the first heat treatment time. The desired or suitable coating layer can be obtained by performing a second heat treatment under these conditions.

### Positive Electrode

In one or more embodiments, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the positive electrode active materials described above. Additionally, the positive electrode active material layer may optionally further include a binder, a conductive material (e.g., an electron conductor), or a (e.g., any suitable) combination thereof.

According to one or more embodiments, a loading level of the positive electrode active material layer may be about 10 mg/cm² to about 40 mg/cm², for example, about 10 mg/cm² to about 30 about mg/cm², or about 10 mg/cm² to about 20 mg/cm². Additionally, a density of the positive electrode active material layer in the final compressed positive electrode may be about 3.3 g/cc to about 3.7 g/cc, for example, about 3.3 g/cc to about 3.6 g/cc, or about 3.4 g/cc to about 3.58 g/cc. When applying the positive electrode active material according to one or more embodiments, it is desirable or advantageous to implement such a loading level and positive electrode density, and a positive electrode that satisfies the loading level and positive electrode density in the above ranges is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but the present disclosure is not limited thereto.

### Conductive Material

The conductive material (e.g., the electron conductor) is included to provide electrode conductivity and any suitable electrically conductive material may be utilized as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt%, based on 100 wt% of the positive electrode active material layer.

The positive electrode current collector may include Al, but the present disclosure is not limited thereto.

### Rechargeable Lithium Battery

According to some embodiments, a rechargeable lithium battery includes the aforementioned positive electrode, a negative electrode, and electrolyte. As an example, the rechargeable lithium battery may include a positive electrode, a negative electrode, a separator arranged between the positive electrode and the negative electrode, and an electrolyte.

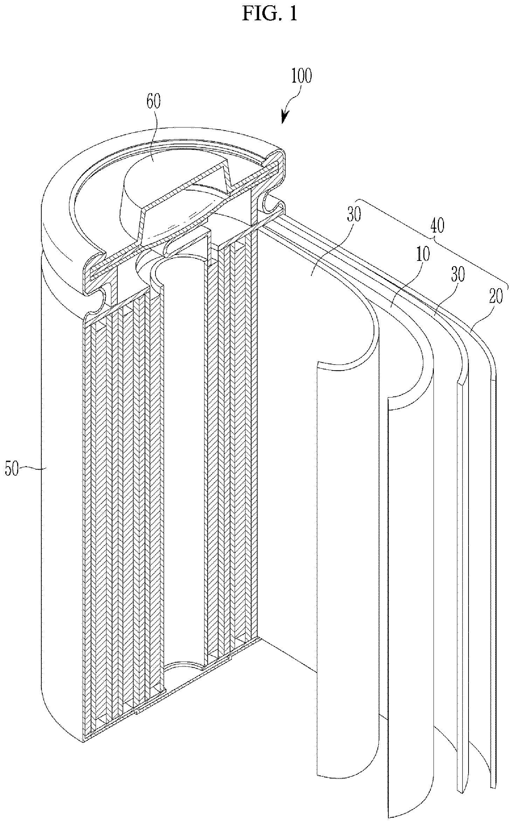

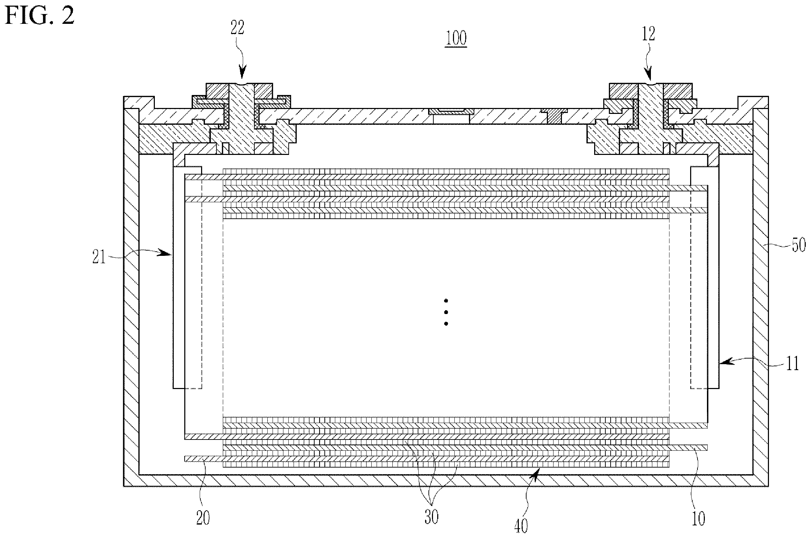

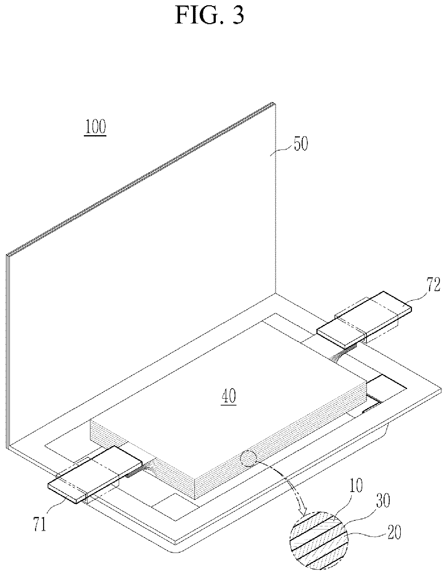

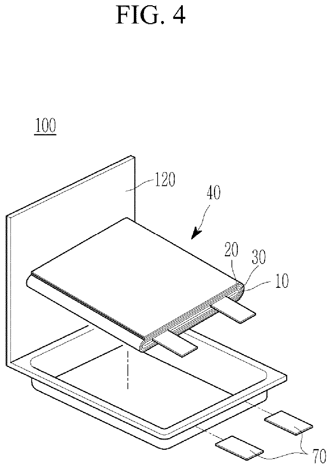

The rechargeable lithium battery may be classified into cylindrical, prismatic, pouch, coin, and/or the like, depending on the shape. FIGs.1 to 4 are schematic diagrams showing the rechargeable lithium battery according to one or more embodiments, where FIG. 1 shows a cylindrical (e.g., circular) battery, FIG. 2 shows a rectangular (e.g., square) battery, and FIGs. 3 and 4 each show a pouch-shaped battery. Referring to FIGs. 1 to 4, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally in FIG. 2, the rechargeable lithium battery 100 may include a positive electrode lead tab 11, a positive electrode terminal 12, a negative lead tab 21, and a negative electrode terminal 22. As shown in FIGs. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

The rechargeable lithium battery according to one or more embodiments may be rechargeable at a high voltage, or may be suitable for being driven at a high voltage. For example, the charging voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to one or more embodiments, the rechargeable lithium battery can significantly reduce an amount of gas generated even if (e.g., when) charged at high voltage and can achieve high capacity and long cycle-life characteristics.

### Negative Electrode

The negative electrode may include a current collector and a negative electrode active material layer on the current collector, and may further include a negative electrode active material, a binder, a conductive material (e.g., an electron conductor), or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include, for example, crystalline carbon, amorphous carbon, or a (e.g., any suitable) combination thereof as a carbon-based negative electrode active material. The crystalline carbon may be irregular, or sheet, flake, spherical, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, or a (e.g., any suitable) combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, or a (e.g., any suitable) combination thereof), or a (e.g., any suitable) combination thereof. The Sn-based negative electrode active material may be Sn, SnOₓ (0 < x ≤ 2, e.g., SnO₂), a Sn alloy, or a (e.g., any suitable) combination thereof.

The silicon-carbon composite may be a composite of silicon and amorphous carbon. An average particle diameter (D₅₀) of the silicon-carbon composite particles (e.g., secondary particles) may be, for example, about 0.5 µm to about 20 µm. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a (e.g., any suitable) combination thereof. The amorphous carbon may include soft carbon or hard carbon, a mesophase pitch carbonized product, and calcined coke.

If the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In one or more embodiments, if the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

In some embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). At this time, the atomic content (e.g., amount) ratio of Si:O, which indicates a degree of oxidation, may be about 99:1 to about 33:67. As utilized herein, if (e.g., when) a definition is not otherwise provided, an average particle diameter (D₅₀) indicates a particle where a cumulative volume is about 50 volume% in a particle size distribution.

The Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and utilized, the mixing ratio may be a weight ratio of about 1:99 to about 90:10.

### Binder

The binder serves to adhere (well adhere) the negative electrode active material particles to each other and also to adhere the negative electrode active material to the current collector.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a (e.g., any suitable) combination thereof.

If (e.g., when) an aqueous binder is utilized as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and utilized. The alkali metal may be Na, K, or Li.

The dry binder may be a polymer material capable of becoming fiber (e.g., in the form of a fiber), and may be, for example, polytetrafluoroethylene, polyvinylidene fluoride, a polyvinylidene fluoride-hexafluoropropylene copolymer, polyethylene oxide, or a (e.g., any suitable) combination thereof.

### Conductive Material

The conductive material (e.g., the electron conductor) is included to provide electrode conductivity and any electrically conductive material may be utilized as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may include a non-aqueous organic solvent and a lithium salt.

The non-aqueous organic solvent serves as a medium for transmitting (e.g., transporting) ions taking part in the electrochemical reaction of a battery. The non-aqueous organic solvent may be a carbonate-based, ester-based, ether-based, ketone-based, or alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond, and/or the like); amides such as dimethylformamide; dioxolanes such as 1,3-dioxolane, 1,4-dioxolane, and/or the like; sulfolanes, and/or the like.

The non-aqueous organic solvent can be utilized alone or in a mixture of two or more types (kinds), and if (e.g., when) two or more types (kinds) are utilized in a mixture, a mixing ratio can be appropriately or suitably adjusted according to the desired or suitable battery performance, which is widely suitable to those working in the field.

If (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

The electrolyte may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and/or the like.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are each independently integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is within the above range, the electrolyte has appropriate or suitable ionic conductivity (e.g., has suitable ion conductivity) and viscosity, and thus excellent or suitable performance can be achieved and lithium ions can move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a (e.g., any suitable) combination thereof on one or both surfaces (e.g., opposite surfaces) of the porous substrate.

The porous substrate may be a polymer film formed of any one polymer selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., TEFLON), and/or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, or a (e.g., any suitable) combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described in more detail. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed in a molar ratio of 1:1 and then, first heat treatment was performed at 850 °C under an oxygen atmosphere for 8 hours to prepare a composite oxide in the form of secondary particles having a composition of LiNi_{0.75}Mn_{0.23}Al_{0.02}O₂ and an average particle diameter (D₅₀) of about 14 µm.

After mixing aluminium sulfate with distilled water as a solvent, the composite oxide was added thereto and then, mixed for 20 minutes to 60 minutes. Herein, an aluminium content (e.g., amount) in the aluminium sulfate was designed to be 1.0 mol% based on 100 mol% of a total metal excluding lithium in the final positive electrode active material. Subsequently, manganese sulfate was added thereto and then, mixed for 10 minutes to 40 minutes. Herein, a manganese content (e.g., amount) in the manganese sulfate was designed to be 0.2 mol% based on 100 wt% of the total metal excluding lithium in the final positive electrode active material. After removing the solvent from the mixed solution, the residue was dried at 190 °C and was subjected to second heat treatment at 825 °C for 8 hours under an oxygen atmosphere to prepare the final positive electrode active material.

### 2. Manufacture of Rechargeable Lithium Battery Cell

98.5 wt% of the prepared positive electrode active material, 1.0 wt% of a polyvinylidene fluoride binder, and 0.5 wt% of a carbon nanotube conductive material were mixed to prepare a positive electrode active material layer slurry, and the slurry was coated on an aluminium foil current collector and then, dried and compressed to manufacture a positive electrode. Herein, the positive electrode active material layer had a loading level of 10 mg/cm², and the final compressed positive electrode had a density of about 3.4 g/cc.

A negative electrode active material layer slurry was prepared by mixing 97.5 wt% of a graphite negative electrode active material, 1.5 wt% of carboxymethyl cellulose, and 1 wt% of a styrene butadiene rubber in water as a solvent. The negative electrode active material layer slurry was coated on a copper foil current collector and then, dried and compressed to manufacture a negative electrode.

Subsequently, a polytetrafluoroethylene separator and an electrolyte solution prepared by mixing ethylene carbonate and dimethyl carbonate in a volume ratio of 3:7 and dissolving 1 M LiPF₆ in the mixed solvent were utilized (e.g., in a suitable method) to manufacture a rechargeable lithium battery cell.

### Comparative Example 1

A positive electrode active material and a rechargeable lithium battery cell were manufactured in substantially the same manner as in Example 1 except that a composite oxide of LiNi_{0.75}Mn_{0.23}Al_{0.02}O₂ itself was utilized as the positive electrode active material without the Al coating and without the Mn coating.

### Comparative Example 2

A positive electrode active material and a rechargeable lithium battery cell were manufactured in substantially the same manner as in Example 1 except that the positive electrode active material was prepared by dry-coating Al alone without coating Mn.

The Al dry-coating method was performed as follows. A composite oxide with a composition of LiNi_{0.75}Mn_{0.23}Al_{0.02}O₂ in the form of secondary particles was mixed with aluminium oxide powder and then, heat-treated at 825 °C for 8 hours under an oxygen atmosphere to prepare the positive electrode active material dry-coated with Al.

### Comparative Example 3

A positive electrode active material and a rechargeable lithium battery cell were manufactured in substantially the same manner as in Example 1 except that the positive electrode active material was prepared by coating Al without coating Mn.

For example, the positive electrode active material of Comparative Example 3 was prepared by mixing aluminium sulfate with distilled water as a solvent, adding a composite oxide (LiNi_{0.75}Mn_{0.23}Al_{0.02}O₂) thereto and then, mixing them for 20 minutes to 60 minutes, removing the solvent therefrom, and drying the residue at 190 °C and secondarily heat-treating it at 825 °C for 8 hours under an oxygen atmosphere.

### Comparative Example 4

A positive electrode active material and a rechargeable lithium battery cell were manufactured in substantially the same manner as in Example 1 except that the positive electrode active material was prepared by wet-coating Mn alone without coating Al.

For example, the positive electrode active material of Comparative Example 4 was prepared by adding a composite oxide (LiNi_{0.75}Mn_{0.23}Al_{0.02}O₂) to distilled water as a solvent, adding manganese sulfate thereto and then, mixing them for 10 minutes to 40 minutes, removing the solvent therefrom, and drying the residue at 190 °C and secondarily heat-treating it at 825 °C under an oxygen atmosphere for 8 hours.

### Evaluation Example 1: Analysis of Positive Electrode Active Material

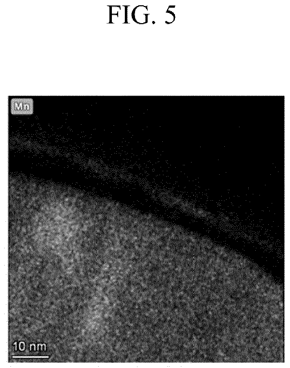

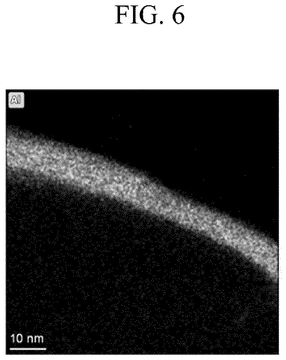

After cutting the positive electrode active material particles of Example 1 with a focused ion beam (FIB), SEM-EDS and HR-STEM analysis were performed on the cross-section. FIG. 5 is an SEM-EDS analysis image of the cross-section of the positive electrode active material of Example 1, in which Mn was highlighted, and FIG. 6 is an image in which Al was highlighted from the same analysis.

Referring to FIGs. 5 and 6, a first coating layer containing Al at high density on the surface of the core particles was formed with a substantially uniform thickness, and a second coating layer containing Mn was formed on the first coating layer.

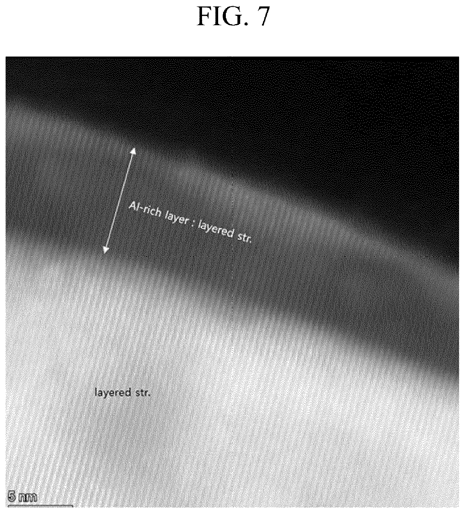

FIG. 7 is an HR-STEM image of the positive electrode active material cross-section of Example 1, in which the first and second coating layers as well as the core particles had a layered structure.

### Evaluation Example 2: Charge/discharge Characteristics and High Temperature Cycle-life Characteristics

The rechargeable lithium battery cells according to Example 1 and Comparative Examples 1 to 4 were constant current-charged to 4.45 V at 0.2 C and constant voltage-charged to 0.05 C and then, discharged to a cut-off voltage of 3.0 V at 0.2 C at 25 °C as the initial charge and discharge.

Subsequently, the cells were repeatedly charged at 1.0 C within a voltage range of 3.0 V to 4.45 V and discharged at 1.0 C at 45 °C 25 times or more to calculate a ratio of 25^{th} cycle discharge capacity to the initial discharge capacity, and the results are shown in Table 1.

**(Table 1)**

| | | Core Ni:Mn:Al | Al coating | Mn coating | 4.45 V capacity (mAh/g) | High-temperature cycle-life (%, @25cyc) |
|---|---|---|---|---|---|---|
| Example 1 | 75:23:2 | 1.0 mol% | wet | 0.2 mol% | 195.5 | 93.20 |
| Comparative Example 1 | 75:23:2 | - | - | - | 193.9 | 61.60 |
| Comparative Example 2 | 75:23:2 | 1.0 mol% | dry | - | 195.6 | 75.10 |
| Comparative Example 3 | 75:23:2 | 1.0 mol% | wet | - | 195.2 | 88.90 |
| Comparative Example 4 | 75:23:2 | - | - | 0.2 mol% | 194.9 | 89.70 |

Referring to Table 1, the rechargeable lithium battery cell of Example 1 realized high initial discharge capacity and cycle-life characteristics, compared with the cells of Comparative Examples 1 to 4.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Unless otherwise defined, in the present disclosure, the term "particle diameter" refers to an average diameter if (e.g., when) particles are spherical and refers to an average major axis length if (e.g., when) particles are non-spherical.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be practical example embodiments, it is to be understood that present disclosure is not limited to the disclosed embodiments, but, on the contrary, is intended to cover various modifications and equivalent arrangements included within the scope of the appended claims, and equivalents thereof.

Embodiments are set out in the following clauses:
Clause 1. A positive electrode active material, comprising:
   a core particle comprising a layered lithium (Li) nickel (Ni)-manganese (Mn)-based composite oxide,
   a first coating layer on a surface of the core particle and comprising Al, and
   a second coating layer on the first coating layer and comprising Mn.
Clause 2. The positive electrode active material of clause 1, wherein the layered lithium nickel-manganese-based composite oxide comprises:
   60 mol% to 80 mol% of nickel, and
   greater than or equal to 10 mol% of manganese,
   each of which being based on 100 mol% of a total amount of metal excluding lithium in the positive electrode active material.
Clause 3. The positive electrode active material of clause 1 or clause 2, wherein the layered lithium nickel-manganese-based composite oxide further comprises 1 mol% to 3 mol% of aluminium (Al), based on 100 mol% of a total amount of metal excluding lithium in the positive electrode active material.
Clause 4. The positive electrode active material of any one of clauses 1 to 3, wherein the layered lithium nickel-manganese-based composite oxide comprises at most 0.01 mol% of cobalt (Co), based on 100 mol% of a total amount of metal excluding lithium in the positive electrode active material.
Clause 5. The positive electrode active material of any one of clauses 1 to 4, wherein the layered lithium nickel-manganese-based composite oxide is represented by Chemical Formula 1:

   [Chemical Formula 1] Liₐ₁Niₓ₁Mn_{y1}Al_{z1}M¹_{w1}O_{2-b1}X_{b1}

   wherein in Chemical Formula 1,
   0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1,
   M¹ is one or more elements selected from among boron (B), barium (Ba), calcium (Ca), cerium (Ce), chromium (Cr), iron (Fe), magnesium (Mg), molybdenum (Mo), niobium (Nb), silicon (Si), tin (Sn), strontium (Sr), titanium (Ti), vanadium (V), tungsten (W), yttrium (Y), and zirconium (Zr), and
   X is one or more elements selected from among fluorine (F), phosphorus (P), and sulfur (S).
Clause 6. The positive electrode active material of any one of clauses 1 to 5, wherein the first coating layer and the second coating layer are each independently in a form of a continuous film.
Clause 7. The positive electrode active material of any one of clauses 1 to 6, wherein
   the first coating layer is 5 nm to 40 nm in thickness, and
   the second coating layer is less than or equal to 10 nm in thickness.
Clause 8. The positive electrode active material of any one of clauses 1 to 7, wherein a ratio of a thickness of the second coating layer to a thickness of the first coating layer is less than or equal to 0.5.
Clause 9. The positive electrode active material of any one of clauses 1 to 8, wherein
   Al from the first coating layer is 0.1 mol% to 2 mol% in amount based on 100 mol% of a total amount of metal excluding lithium in the positive electrode active material, and
   Mn from the second coating layer is 0.01 mol% to 1 mol% in amount based on 100 mol% of the total amount of metal excluding lithium in the positive electrode active material.
Clause 10. The positive electrode active material of any one of clauses 1 to 8, wherein
   Al from the first coating layer is 0.5 mol% to 1.5 mol% in amount based on 100 mol% of a total amount of metal excluding lithium in the positive electrode active material, and
   Mn from the second coating layer is 0.05 mol% to 0.5 mol% in amount based on 100 mol% of the total amount of metal excluding lithium in the positive electrode active material.
Clause 11. The positive electrode active material of any one of clauses 1 to 10, wherein a ratio of an amount of Mn from the second coating layer to an amount of Al from the first coating layer is less than 0.5.
Clause 12. The positive electrode active material of any one of clauses 1 to 11, wherein
   the first coating layer comprises aluminium oxide, lithium-aluminium oxide, or a combination thereof, and
   the second coating layer comprises manganese oxide, lithium-manganese oxide, aluminium-manganese oxide, lithium-aluminium-manganese oxide, or a combination thereof.
Clause 13. The positive electrode active material of any one of clauses 1 to 12, wherein the first coating layer and the second coating layer each independently have a layered structure.
Clause 14. The positive electrode active material of clause 13, wherein the second coating layer further comprises a spinel structure.
Clause 15. The positive electrode active material of any one of clauses 1 to 14, wherein
   the core particle is in a form of a secondary particle made by aggregating a plurality of primary particles, and
   the positive electrode active material further comprises a grain boundary coating portion, the grain boundary coating portion comprising Al and on surfaces of the primary particles inside secondary particle.
Clause 16. The positive electrode active material of clause 15, wherein Al from the grain boundary coating portion is less in amount than Al from the first coating layer.
Clause 17. The positive electrode active material of any one of clauses 1 to 16, wherein an average particle diameter (D₅₀) of the positive electrode active material is 10 µm to 20 µm.
Clause 18. A method of preparing a positive electrode active material, the method comprising:
   mixing a nickel (Ni)-manganese (Mn)-based composite hydroxide and a lithium (Li) raw material, and performing a first heat treatment to obtain a layered lithium nickel-manganese-based composite oxide,
   mixing an aluminium (Al) raw material with an aqueous solvent, adding the lithium nickel-manganese-based composite oxide and mixing to prepare a first mixture,
   mixing an Mn raw material with the first mixture to prepare a second mixture, and
   drying the second mixture and performing a second heat treatment.
Clause 19. The method of clause 18, wherein the layered lithium nickel-manganese-based composite oxide comprises:
   60 mol% to 80 mol% of nickel,
   greater than or equal to 10 mol% of manganese,
   0 mol% to 3 mol% of aluminium, and
   0 mol% to 0.01 mol% of cobalt,
   each of which being based on 100 mol% of a total amount of metal excluding lithium in the lithium nickel-manganese-based composite oxide.
Clause 20. The method of clause 18 or clause 19, wherein
   Al from the Al raw material is 0.1 mol% to 2 mol% in amount based on 100 mol% of a total amount of metal excluding lithium in the positive electrode active material, and
   Mn from the Mn raw material is 0.01 mol% to 1 mol% in amount based on 100 mol% of the total amount of metal excluding lithium in the positive electrode active material.
Clause 21. The method of any one of clauses 18 to 20, wherein
   the Al raw material comprises aluminium nitrate, aluminium sulfate, aluminium carbonate, aluminium hydroxide, or a combination thereof, and
   the Mn raw material comprises manganese nitrate, manganese sulfate, manganese carbonate salt, manganese hydroxide, or a combination thereof.
Clause 22. The method of any one of clauses 18 to 21, wherein a solution obtained by mixing the Al raw material in the aqueous solvent has a pH of 1.5 to 3.5.
Clause 23. The method of any one of clauses 18 to 22, wherein
   the first heat treatment is performed at 750 °C to 950 °C, and
   the second heat treatment is performed at 700 °C to 850 °C.
Clause 24. A positive electrode, comprising:
   a positive electrode current collector, and
   a positive electrode active material layer on the positive electrode current collector,
   wherein the positive electrode active material layer comprises the positive electrode active material of any one of clauses 1 to 17.
Clause 25. The positive electrode of clause 24, wherein a loading level of the positive electrode active material layer is 10 mg/cm² to 40 mg/cm².
Clause 26. The positive electrode of clause 24 or clause 25, wherein a density of the positive electrode active material layer is 3.3 g/cc to 3.7 g/cc.
Clause 27. A rechargeable lithium battery, comprising:
   the positive electrode of any one of clauses 24 to 26,
   a negative electrode, and
   an electrolyte.
28. The rechargeable lithium battery of clause 27, wherein a charging voltage of the rechargeable lithium battery is greater than or equal to 4.45 V.

### <Reference Numerals >

| | |
|---|---|
| 100: rechargeable lithium battery | 10: positive electrode |
| 11 : positive electrode lead tab | 12: positive terminal |
| 20: negative electrode | 21: negative electrode lead tab |
| 22: negative terminal | 30: separator |
| 40: electrode assembly | 50: case |
| 60: sealing member | 70: electrode tab |
| 71: positive electrode tab | 72: negative electrode tab |

## Claims

1. A positive electrode active material, comprising:
a core particle comprising a layered lithium (Li) nickel (Ni)-manganese (Mn)-based composite oxide,
a first coating layer on a surface of the core particle and comprising Al, and
a second coating layer on the first coating layer and comprising Mn.

2. The positive electrode active material as claimed in claim 1, wherein the layered lithium nickel-manganese-based composite oxide comprises:
60 mol% to 80 mol% of nickel, and
greater than or equal to 10 mol% of manganese,
each of which being based on 100 mol% of a total amount of metal excluding lithium in the layered lithium nickel-manganese-based composite oxide.

3. The positive electrode active material as claimed in claim 1 or claim 2, wherein the layered lithium nickel-manganese-based composite oxide further comprises 1 mol% to 3 mol% of aluminium (Al), based on 100 mol% of a total amount of metal excluding lithium in the layered lithium nickel-manganese-based composite oxide.

4. The positive electrode active material as claimed in any one of claims 1 to 3, wherein:
(i) the layered lithium nickel-manganese-based composite oxide comprises at most 0.01 mol% of cobalt (Co), based on 100 mol% of a total amount of metal excluding lithium in the layered lithium nickel-manganese-based composite oxide; and/or
(ii) the layered lithium nickel-manganese-based composite oxide is represented by Chemical Formula 1:
[Chemical Formula 1] Liₐ₁Niₓ₁Mn_{y1}Al_{z1}M¹_{w1}O_{2-b1}X_{b1}
wherein in Chemical Formula 1,
0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1,
M¹ is one or more elements selected from among boron (B), barium (Ba), calcium (Ca), cerium (Ce), chromium (Cr), iron (Fe), magnesium (Mg), molybdenum (Mo), niobium (Nb), silicon (Si), tin (Sn), strontium (Sr), titanium (Ti), vanadium (V), tungsten (W), yttrium (Y), and zirconium (Zr), and
X is one or more elements selected from among fluorine (F), phosphorus (P), and sulfur (S).

5. The positive electrode active material as claimed in any one of claims 1 to 4, wherein the first coating layer and the second coating layer are each independently in a form of a continuous film.

6. The positive electrode active material as claimed in any one of claims 1 to 5, wherein:
(i) the first coating layer is 5 nm to 40 nm in thickness, and
the second coating layer is less than or equal to 10 nm in thickness; and/or
(ii) a ratio of a thickness of the second coating layer to a thickness of the first coating layer is less than or equal to 0.5.

7. The positive electrode active material as claimed in any one of claims 1 to 6, wherein:
(i) Al from the first coating layer is 0.1 mol% to 2 mol% in amount based on 100 mol% of a total amount of metal excluding lithium in the positive electrode active material, and
Mn from the second coating layer is 0.01 mol% to 1 mol% in amount based on 100 mol% of the total amount of metal excluding lithium in the positive electrode active material; or
(ii) Al from the first coating layer is 0.5 mol% to 1.5 mol% in amount based on 100 mol% of a total amount of metal excluding lithium in the positive electrode active material, and
Mn from the second coating layer is 0.05 mol% to 0.5 mol% in amount based on 100 mol% of the total amount of metal excluding lithium in the positive electrode active material.

8. The positive electrode active material as claimed in any one of claims 1 to 7, wherein:
(i) a ratio of an amount of Mn from the second coating layer to an amount of Al from the first coating layer is less than 0.5; and/or
(ii) the first coating layer comprises aluminium oxide, lithium-aluminium oxide, or a combination thereof, and
the second coating layer comprises manganese oxide, lithium-manganese oxide, aluminium-manganese oxide, lithium-aluminium-manganese oxide, or a combination thereof; and/or
(iii) the first coating layer and the second coating layer each independently have a layered structure, optionally wherein the second coating layer further comprises a spinel structure.

9. The positive electrode active material as claimed in any one of claims 1 to 8, wherein:
(i) the core particle is in a form of a secondary particle made by aggregating a plurality of primary particles, and
the positive electrode active material further comprises a grain boundary coating portion, the grain boundary coating portion comprising Al and on surfaces of the primary particles inside secondary particle, optionally wherein Al from the grain boundary coating portion is less in amount than Al from the first coating layer; and/or
(ii) an average particle diameter (D₅₀) of the positive electrode active material is 10 µm to 20 µm.

10. A method of preparing a positive electrode active material, the method comprising:
mixing a nickel (Ni)-manganese (Mn)-based composite hydroxide and a lithium (Li) raw material, and performing a first heat treatment to obtain a layered lithium nickel-manganese-based composite oxide,
mixing an aluminium (Al) raw material with an aqueous solvent, adding the layered lithium nickel-manganese-based composite oxide and mixing to prepare a first mixture,
mixing an Mn raw material with the first mixture to prepare a second mixture, and
drying the second mixture and performing a second heat treatment.

11. The method as claimed in claim 10, wherein:
(i) the layered lithium nickel-manganese-based composite oxide comprises:
60 mol% to 80 mol% of nickel,
greater than or equal to 10 mol% of manganese,
0 mol% to 3 mol% of aluminium, and
0 mol% to 0.01 mol% of cobalt,
each of which being based on 100 mol% of a total amount of metal excluding lithium in the layered lithium nickel-manganese-based composite oxide; and/or
(ii) Al from the Al raw material is 0.1 mol% to 2 mol% in amount based on 100 mol% of a total amount of metal excluding lithium in the positive electrode active material, and
Mn from the Mn raw material is 0.01 mol% to 1 mol% in amount based on 100 mol% of the total amount of metal excluding lithium in the positive electrode active material.

12. The method as claimed in claim 10 or claim 11, wherein:
(i) the Al raw material comprises aluminium nitrate, aluminium sulfate, aluminium carbonate, aluminium hydroxide, or a combination thereof, and
the Mn raw material comprises manganese nitrate, manganese sulfate, manganese carbonate salt, manganese hydroxide, or a combination thereof; and/or
(ii) a solution obtained by mixing the Al raw material in the aqueous solvent has a pH of 1.5 to 3.5; and/or
(iii) the first heat treatment is performed at 750 °C to 950 °C, and
the second heat treatment is performed at 700 °C to 850 °C.

13. A positive electrode, comprising:
a positive electrode current collector, and
a positive electrode active material layer on the positive electrode current collector,
wherein the positive electrode active material layer comprises the positive electrode active material as claimed in any one of claims 1 to 9.

14. The positive electrode as claimed in claim 13, wherein:
(i) a loading level of the positive electrode active material layer is 10 mg/cm² to 40 mg/cm²; and/or
(ii) a density of the positive electrode active material layer is 3.3 g/cc to 3.7 g/cc.

15. A rechargeable lithium battery, comprising:
the positive electrode as claimed in claim 13 or claim 14,
a negative electrode, and
an electrolyte, optionally wherein a charging voltage of the rechargeable lithium battery is greater than or equal to 4.45 V.
